# EUROPEAN PATENT APPLICATION

(11) **EP 1 607 831 A2**
(43) Date of publication of application: **21.12.2005**
(21) Application number: 05252736.3
(22) Date of filing: 03.05.2005
(51) Int. Cl.: G06F 1/18

(54) **Removable expansion module latch system**

(30) Priority: 03.05.2004 US 836342
(71) Applicant: Hewlett-Packard Development Company, L.P., Houston, TX 77070 (US)
(72) Inventor: Robertson, Kenneth G., San Jose, CA 95125 (US); Gradwohl, Raymond L., Saratoga, CA 95070 (US); Gagne, Jacques L., Los Gatos, CA 95030 (US)
(74) Representative: Powell, Stephen David

(57) **Abstract**

In an expansion module latch mechanism including an expansion module 10 and a latch release 23 is described, the expansion module 10 has a recess 26 for receiving a retaining latch 76 external to the expansion module 10 for retaining the expansion module 10 positioned with respect to an expansion module sleeve 62. The latch release 23 is attached to the expansion module 10 for expelling a retained latch 76 from the recess 26. An expansion module bay latch mechanism for retaining an expansion module 10 has a module sleeve 62 having a latch clip 70 positioned on a side wall of the module sleeve 62. The latch clip includes a latch 76 adapted to interfit with a recess 26 in an expansion module 10 and a paddle 78 connected to the latch 76 which, in response to contact with the expansion module 10, urges the latch 76 into the recess 26.

## Description

### Related Applications

This application is related to each of the following applications: "Removable Information Storage Device Enclosure," filed on May 3, 2004 (HP Docket No.: 200315989-1), "Interface for Expansion Module and Expansion Module Bay," filed on May 3, 2004 (HP Docket No. 200402778-1), and "Removable Expansion Module Usable as Internal and External Device," filed on May 3, 2004 (HP Docket No. 200400070-1), and three corresponding European patent applications, all of which are being filed concurrently herewith.

The present invention relates to an apparatus for a removable expansion module latch system.

It is known in the art to use internal volume in a computer system to connect additional storage devices, e.g., hard drives, for the computer system. The additional storage device connection process requires tools and knowledge regarding opening the computer system and adding/replacing the existing storage device. Most users of computer systems are incapable or uncomfortable with opening up a computer system to add additional devices. Most frequently, additional devices are only added by the computer system manufacturer.

Previous types of expansion device latch mechanisms have consisted of a tab protruding out of the side of the expansion module and a single lever rotating the tab to engage with a slot or channel in the receiving sleeve. Disadvantageously, the tab protrudes from the cartridge even when the cartridge is not in use. Unsightly protruding tabs make the cartridge appear as though the cartridge were intended for other use. Also, the tab used externally could be caught or damaged outside the sleeve.

As mentioned above, any rotating latch that would work well in a sleeve application would having protruding elements that are not useful when outside the sleeve in an external usage application.

The present invention provides a removable expansion module latch system.

An expansion module latch mechanism includes an expansion module and a latch release. The expansion module has a recess for receiving a retaining latch external to the expansion module for retaining the expansion module positioned with respect to an expansion module sleeve. The latch release is attached to the expansion module for expelling a retained latch from the recess.

An expansion module bay latch mechanism retains an expansion module positioned with respect to a module sleeve. The expansion module bay latch mechanism has a module sleeve having a latch clip positioned on a side wall of the module sleeve. The latch clip includes a latch adapted to interfit with a recess in an expansion module and a paddle connected to the latch which, in response to contact with the expansion module, urges the latch into the recess.

A releasable expansion module latch system includes the above-described expansion module sleeve retaining the above-described expansion module inserted in the expansion module sleeve.

Still other advantages of the present invention will become readily apparent to those skilled in the art from the following detailed description, wherein the preferred embodiments of the invention are shown and described, simply by way of illustration of the best mode contemplated of carrying out the invention. As will be realized, the invention is capable of other and different embodiments, and its several details are capable of modifications in various obvious respects, all without departing from the invention.

The present invention is illustrated by way of example, and not by limitation, in the figures of the accompanying drawings, wherein elements having the same reference numeral designations represent like elements throughout and wherein:

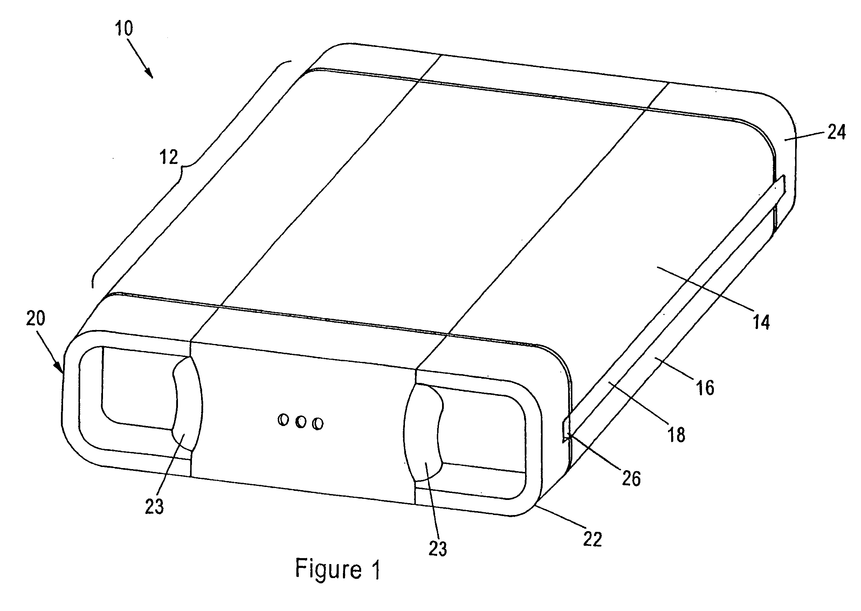

Figure 1 is a perspective view of an expansion module usable in conjunction with an embodiment of the present invention;
Figure 2 is a perspective view of an expansion module bay for receiving the expansion module of Figure 1;
Figure 3 is a perspective view of the expansion module of Figure 1 inserted in the expansion module bay of Figure 2;
Figure 4 is a revealed perspective view of the pair of latch releases and the pair of latch clips according to an embodiment of the present invention positioned as depicted in Figure 3;
Figure 5 is a perspective view of a single latch release and latch clip of the pair of latch clips and latch releases depicted in Figure 4; and
Figure 6 is a rear perspective view of an end cap useable in conjunction with an embodiment of the present invention.

In contrast with the above-described approaches, the mechanism of the present invention provides a releasable latch for an expansion module of a computer system. A releasable latch according to an embodiment of the present invention enables one-handed operation to quickly and easily install and latch, as well as unlatch and remove, an expansion module, e.g., having a hard drive, from an expansion module bay in a computer system.

An embodiment of the present invention is described with reference to use in conjunction with the expansion module of co-pending U.S. patent applications entitled, "Interface for Expansion Module and Expansion Module Bay," filed on May 3, 2004, "Removable Information Storage Device Enclosure," filed on May 3, 2004, all assigned to the present assignee, and hereby incorporated by reference in their entirety herein. However, it is to be understood that the present invention is applicable to other different configurations.

A more detailed description of the Expansion Module and Expansion Module Bay may be found in the first above-referenced patent application. An overview description of the module and module bay is provided herein.

Figure I depicts an expansion module 10 usable in conjunction with an embodiment of the present invention. Expansion module 10 is a rounded rectangular enclosure for receiving an expansion device (not shown), e.g., a hard disk drive.

Expansion module 10 includes a housing 12 including an upper rectangular channel 14 having a generally U-shaped cross-section connected to a lower rectangular channel 16 having a generally U-shaped cross-section to form a rounded rectangular enclosure having a rounded rectangular opening at each end. A pair of C-shaped connecting strips 18, 20 join the open ends of the U-shaped channels 14, 16 to each other. C-shaped connecting strips 18, 20 and the mechanism for joining U-shaped channels 14, 16 are more fully described in co-pending U.S. Patent application titled, "Removable Information Storage Device Enclosure."

In one embodiment, upper rectangular channel 14 and lower rectangular channel 16 are made of a thermally conductive material to assist in removing heat from within the expansion module 10. In another embodiment, housing 12 may have a non-rounded rectangular cross-section, an oval or circular cross-section, and a polygonal cross-section.

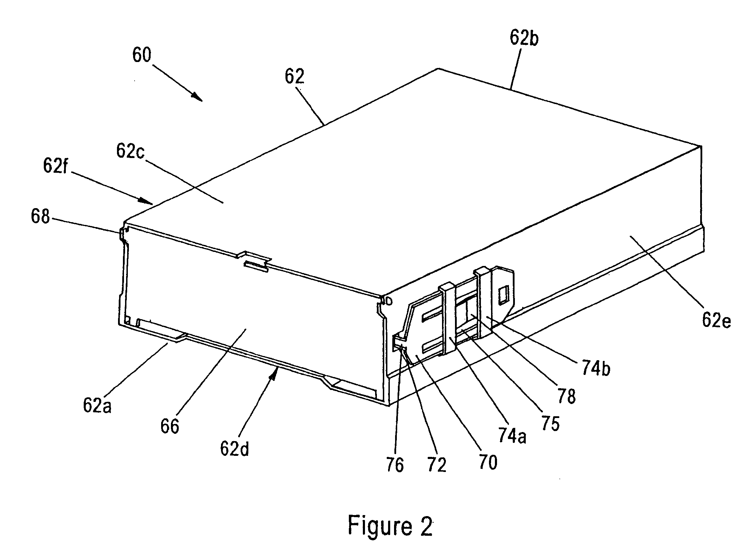

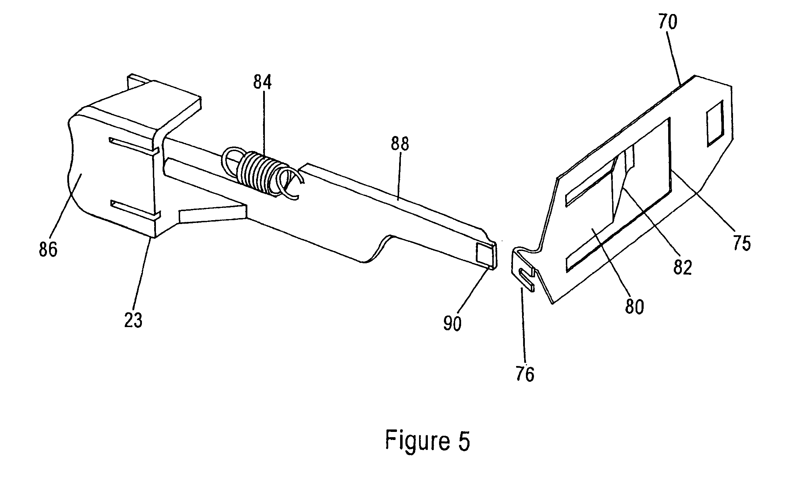

A first end cap 22, having a rounded rectangular cross-section similar to housing 12, attaches at one open end of housing 12 thereby closing the opening. End cap 22 closes the open end of housing 12 to prevent entry of dust and other contaminants and retain expansion device (not shown) within the housing 12 interior. End cap 22 includes a pair of latch releases 23 (partially shown) for inserting and removing expansion module 10 from an expansion module bay 60 (Figure 2) described in detail below. Operation of latch release 23 is described in detail below with reference to Figure 5.

End cap 22 further includes a pair of recesses 26 along each side of the end cap and generally aligned with connecting strips 18, 20 for receiving a latch 76 (Figure 2) to retain module 10 in expansion module bay 60 (Figure 2). In one embodiment, end cap 22 includes a single recess 26 along one side and a single latch release 23 toward the distal side of the end cap from the single recess.

In one embodiment, end cap 22 attaches to one of rectangular channels 14, 16 and the other rectangular channel 16, 14 attaches to the first rectangular channel via connecting strips 18, 20, as described above. In this manner, end cap 22 need not be removed in order to access housing 12 interior.

A second end cap 24, having a rounded rectangular cross-section similar to housing 12 and first end cap 22, attaches at the other open end of housing 12 at the distal end from end cap 22 thereby closing both openings of the housing. End cap 24, described in further detail in conjunction with the above-reference co-pending application, closes the open end of housing 12 to minimize entry of dust and other contaminants and retain expansion device (not shown) within the housing 12 interior and includes connectors for providing power to and transmitting and receiving data signals to/from module 10.

In one embodiment, end cap 24 attaches to one of rectangular channels 14, 16 and the other rectangular channel 16, 14 attaches to the first rectangular channel via connecting strips 18, 20, as described above. In this manner, end cap 24 need not be removed in order to access housing 12 interior.

Figure 2 depicts an expansion module bay 60 according to an embodiment of the present invention for receiving the above-described expansion module 10. Module bay 60 includes an elongated parallelepiped module sleeve 62 having a front opening 62a in one face and a rear face 62b for receiving connectors from a computer system (not shown). Front opening 62a is sized to receive expansion module 10 to the interior of module bay 60. Module sleeve 62 further includes a top side 62c, a bottom side 62d (not shown), a right side wall 62e, and a left side wall 62f (not shown).

A bay door 66 substantially covers front opening 62a of module bay 60. Bay door 66 attaches rotatably module bay 60 at either end of the door and remains in place over front opening 62a by the force of spring 68 mounted at one end of front opening 62a. Module 10 insertion force moves bay door 66 upward by contact with a leading edge of the module.

Module bay 60 is mounted within a standard drive bay of a computer system (not shown) via standard mounting hardware and a connector (not shown) connects to rear face 62b to provide data and power connections to module 10 when inserted in module bay 60.

Module sleeve 62 includes a latch clip 70 mounted on right side wall 62e for retaining an inserted expansion module 10. Module sleeve 62 includes a second latch clip (not shown) mounted on left side wall 62f in the same configuration and operation of latch clip 70 and therefore only latch clip 70 is described below. Latch clip 70 extends in a direction parallel to the right side wall 62e and is positioned over a side wall opening 72. Retaining ribs 74a, 74b, formed as part of right side wall 62e of sleeve 62, retain the latch clip 70 in position with respect to opening 72 and connect either side of opening 72 from near the top of right side wall 62e to near the bottom of the right side wall. In another embodiment, retaining ribs 74a, 74b may be replaced by a single retaining rib and are attached rather than being formed as a part of side wall 62e. Latch clip 70 fits between right side wall 62e and retaining ribs 74a, 74b.

Latch clip 70 is substantially flat, except as noted and described below, and approximately the same thickness as side wall 62e. Latch clip 70 has a central substantially rectangular opening 75. In one embodiment, latch clip 70 has a generally hexagonal shape larger than generally hexagonal-shaped opening 72.

Latch clip 70 includes a latch 76 at the end closest to front face 62a of sleeve 62 and a paddle 78 positioned within central opening 75 between latch 76 and the distal end of latch 76 and connected to latch 76. Latch 76 protrudes from the end of latch clip 70 in a direction generally perpendicular to the length of latch clip 70 as installed along right side wall 62e and inward toward the interior of module sleeve 62. Latch 76 forms a V shape as viewed from above, e.g., looking down on the top face 62c of module sleeve 62.

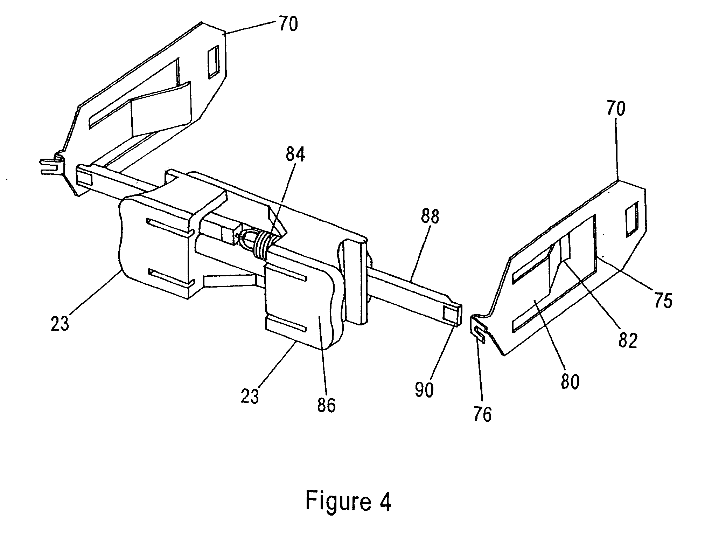

Paddle 78 extends along the mid-section of latch clip 70 from the side of opening 75 nearest latch 76 toward the opposite side of opening 75. A proximal region 80 (Figure 4) of paddle 78 connects the paddle to the edge of opening 75 and extends in a direction parallel with latch clip 70 toward the opposite side of opening 75. A distal region 82 (Figure 4) of paddle 78 connects to the end of proximal region 80 and extends at an oblique angle from proximal region 80 toward rear face 62b and the interior of sleeve 62. Latch 76 and paddle 78 are connected via a portion of latch clip 70 such that movement of distal region 78 in one direction causes movement of latch 76 in the opposite direction, e.g., as distal region 78 moves toward the exterior of sleeve 62, latch 76 moves toward the interior of sleeve 62.

With the expansion module bay 60 empty, latch clip 70 is biased such that distal region 82 of paddle 78 extends into the interior of sleeve 62 through opening 72 of right side wall 62e of sleeve 62 and also through opening 75 of the latch clip. Further, prior to insertion of module 10 into module bay 60, latch 76 does not intrude into the interior of sleeve 62.

With an expansion module 10 positioned in module bay 60, one side of the module contacts distal region 82 of paddle 78 and urges the distal region in a direction toward the exterior of sleeve 62, i.e., toward opening 75 of latch clip 70. Retaining rib 74a prevents latch clip 70 from moving outward from sleeve 62 and acts as a pivot point causing the end of latch clip 70 having latch 76 attached to move toward the interior of sleeve 62 and thereby urge latch 76 inward. With expansion module 10 inserted in module bay 60 and door 66 rotated upward before the side of the module contacts paddle 78, the module urges the paddle away from the module and in reaction the paddle urges the latch 76 toward the module and into the module recess thereby retaining the module positioned in the module bay.

As module 10 slides into module bay 60, the side of the module contacts distal region 82 of paddle 78 and urges the paddle away from the module. As the distal region 82 moves away from module 10, latch 76 moves toward the module and into contact with the side of the module contacting distal region 82. Force levered from distal region 82 retains latch 76 in contact with the module side as the module is slid into module bay 60. As module 10 slides into the final position within module bay 60, latch 76 snaps into position in recess 26 of the module retaining the module in the module bay.

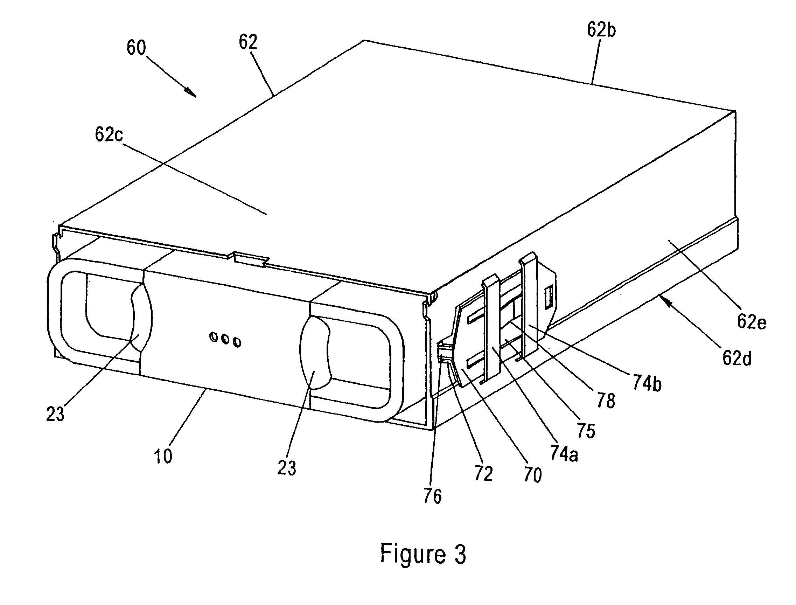

Figure 3 depicts an expansion module bay 60 according to an embodiment of the present invention having the above-described expansion module 10 positioned within the interior of the module bay and latch 76 interfit in recess 26 of the module.

Figure 4 depicts a pair of latch releases 23 and a pair of latch clips 70 according to an embodiment of the present invention positioned as depicted in Figure 3 without depicting the expansion module bay 60 and the expansion module 10.

A tension spring 84 connects the pair of latch releases 23 and urges the releases toward each other, i.e., tension spring 84 pulls each latch release away from a respective recess 26 when installed in module 10 and toward the other latch release.

The pair of latch releases 23 are configured and operate in the same manner and therefore for simplicity and clarity only a single latch release is now described. Latch release 23 includes a latch release grip 86 at one end and a latch release actuator 88 at the distal end from the latch release grip. The end of latch release actuator 88 includes a tip 90 for contacting latch 76.

Each end of tension spring 84 is connected to one of the pair of latch releases 23 between grip 86 and actuator 88 of a respective latch release 23. The pair of latch releases 23 are shaped to interfit with each other facing in opposite directions and slide alongside each other until grips 86 of each latch release are adjacent to each other.

In order to release latch 76 from recess 26, a user grips the pair of latch releases 23 and urges the releases toward each other against tension spring 84 resistance thereby bringing the latch release tip 90 into contact with latch 76 and urging latch 76 out of recess 26 away from interior of sleeve 62. After latch 76 is removed from recess 26, the user is able to withdraw expansion module 10 from expansion module bay 60. After the rear face 24 of expansion module 10 passes beyond distal region 82 of paddle 78, paddle 78 moves toward the interior of sleeve 62 and latch 76 moves toward the exterior of sleeve 62 thereby allowing door 66 to rotate closed. In this manner, latch 76 does not protrude into the sleeve interior until actuated by insertion of module 10. Further, latch release actuator 88 does not protrude exterior of the end cap 22 until latch release 23 is actuated by a user and thereby presenting fewer external features of module 10 to be caught or damaged.

Figure 5 depicts one latch release 23 and the corresponding latch clip 70 of the pair of latch releases and latch clips depicted in Figure 4 in order to more clearly display the shape of the latch release. In one embodiment, end cap 22 includes an attachment point (not shown) for connecting one end of tension spring 84 enabling use of a single latch clip 70 in conjunction with a single latch release 23 to retain an expansion module 10 in an expansion module bay 60. In this embodiment, a user need only move the single latch release 23 with respect to end cap 22 in order to release latch 76 from recess 26 in order to enable removal of module 10 from module bay 60.

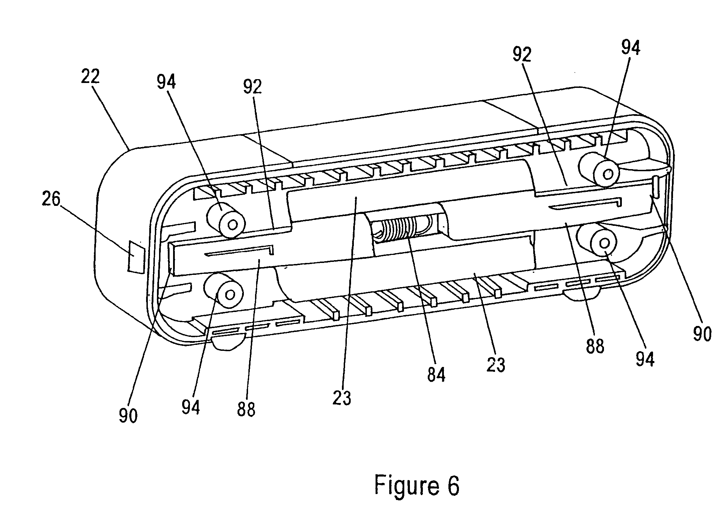

Figure 6 depicts the interior side of end cap 22. End cap 22 includes the pair of latch releases 23 arranged along the center of the end cap and positioned such that the pair of latch release actuators 88 slide along a pair of channels 92 at either side of end cap 22. Channel 92 is connected to and opens to the base of recess 26 in order to allow latch release tip 90 to slide along channel 92 and, in operation, protrude from the base of the recess to contact latch 76 and urge the latch out of the recess. End cap 22 includes four receiving mounts 94 spaced about the interior of the end cap for receiving fasteners from housing 12 to secure the end cap to the housing.

In addition to the elimination of any protruding mating tab or latch as mentioned above, the latch release actuator 88 remains within the boundary of the module 10 and does not rotate or protrude out in an external usage situation such as using a rotating lever. Also, from an industrial design standpoint, the latch design in the front side of expansion module 10 and expansion module bay 60 is symmetrical and presents a clean appearance outside the sleeve 62 in an external situation without having an offset lever with no visible use.

It will be readily seen by one of ordinary skill in the art that the present invention fulfills all of the advantages set forth above. After reading the foregoing specification, one of ordinary skill will be able to affect various changes, substitutions of equivalents and various other aspects of the invention as broadly disclosed herein. It is therefore intended that the protection granted hereon be limited only by the definition contained in the appended claims and equivalents thereof.

## Claims

1. An expansion module 10 having a latch release 23, comprising:
an expansion module 10 having a recess 26 for receiving a retaining latch 76 external to the expansion module 10 for retaining the expansion module 10 positioned with respect to an expansion module sleeve 62; and
a latch release 23 attached to the expansion module 10 for expelling a retained latch 76 from the recess 26.

2. The expansion module 10 of claim 1 wherein prior to user manipulation of the latch release 23, the latch release 23 is retained within the expansion module 10.

3. The expansion module 10 of claim 1, wherein the expansion module latch mechanism further comprises:
a second recess on a module side opposite the first recess 26; and
a second latch release attached to the expansion module 10 opposite the first latch release 23 for expelling a second retained latch from the second recess.

4. The expansion module 10 of claim 3, further comprising:
a tension spring 84 connecting the first and second latch releases 23 to each other and urging the first latch release and second recess latch release toward each other.

5. An expansion module bay latch mechanism for retaining an expansion module 10 positioned with respect to a module sleeve 62, comprising:
a module sleeve 62 having a latch clip 70 positioned on a side wall of the module sleeve, the latch clip 70 comprising:
a latch 76 adapted to interfit with a recess 26 in an expansion module 10; and
a paddle 78 connected to the latch 76 wherein responsive to contact with the expansion module 10 the paddle 78 urges the latch 76 into the recess 26.

6. The latch mechanism of claim 5, further comprising:
a second latch clip positioned on another side wall of the module sleeve 62 opposite the first latch clip 70, the second latch clip comprising:
a second latch adapted to interfit with a second recess in the expansion module 10; and
a second paddle connected to the second latch wherein responsive to contact with the expansion module 10 the second paddle urges the second latch into the second recess.

7. The latch mechanism of claim 5, wherein the latch clip 70 further comprises:
a flexible connector connecting the latch 76 and paddle 78 wherein the flexible connector urges the latch 76 into the recess 26 during expansion module 10 contact with the paddle 78.

8. A releasable expansion module latch system, comprising:
an expansion module sleeve 62 having a latch clip 70 positioned on a side wall of the module sleeve, the latch clip 70 comprising:
a latch 76 adapted to interfit with a recess 26 in an expansion module 10; and
a paddle 78 connected to the latch 76 wherein responsive to contact with the expansion module 10 the paddle 78 urges the latch 76 into the recess; and
an expansion module 10 having a latch release 23, comprising:
an expansion module 10 having a recess 26 for receiving a retaining latch 76 external to the expansion module 10 for retaining the expansion module 10 positioned with respect to an expansion module sleeve 62; and
a latch release 23 attached to the expansion module 10 for expelling a retained latch 76 from the recess 26;
wherein the expansion module 10 is adapted to be inserted into the expansion module sleeve 62.

9. A method for retaining an expansion module 10 in position with respect to an expansion module bay 60, comprising the steps of:
inserting an expansion module 10 into contact with a latch clip 70 of an expansion module sleeve 62 of an expansion module bay 60, wherein the expansion module 10 has a recess 26 for receiving a retaining latch 76 external to the expansion module 10, wherein the latch clip 70 is positioned on a side wall of the module sleeve 62, the latch clip 70 having a latch 76 adapted to interfit with the recess 26 in the expansion module 10 and a paddle 78 connected to the latch 76; and
responsive to contact with the expansion module 10, the paddle 78 urging the latch 76 into the recess 26.

10. A method for releasing a retained expansion module 10 from an expansion module bay 60, the expansion module 10 having a recess 26 for receiving a retaining latch 76 and a latch release 23 positioned to expel a retained latch 76 from the recess 26, a tension spring 84 biasing the latch release interior to the expansion module 10, the expansion module bay 60 having a latch clip 70 including a latch 76 for retaining the expansion module 10, comprising the steps of:
urging a latch release 23 in the direction of a tension spring 84 to thereby cause the latch release 23 to urge a latch 76 of a latch clip 70 out of a recess 26; and
after the latch 76 is urged out of the recess 26, urging the expansion module 10 out of the expansion module bay 60.
